# EUROPÄISCHE PATENTANMELDUNG

(11) **EP 1 366 671 A2**
(43) Veröffentlichungstag der Anmeldung: **03.12.2003**
(21) Anmeldenummer: 03010250.3
(22) Anmeldetag: 07.05.2003
(51) Int. Cl.: A23C 19/068, A23C 19/097

(54) **Verfahren zum Herstellen von Mozzarella-Frischkäse und Käsebruch hierfür**

(30) Priorität: 29.05.2002 DE 10224251; 11.06.2002 DE 20209001 U
(71) Anmelder: Spezialitäten-Käserei De Lucia GmbH, 46359 Heiden (DE)
(72) Erfinder: De Lucia, Giuseppe, 46359 Heiden (DE)
(74) Vertreter: Müller-Gerbes, Margot, Dipl.-Ing.

(57) **Zusammenfassung**

Die Erfindung betrifft ein Verfahren zum Herstellen von Mozzarella-Frischkäse, bei dem in einem ersten Verfahrensabschnitt aus Kuhmilch oder Wasserbüffelmilch durch Fermentation und Einlaben ein Käsebruch erhalten wird, in einem zweiten Verfahrensabschnitt der Käsebruch schockgefrostet wird, wobei der Verkäsungsprozeß unterbrochen und ein lagerfähiges transportables Zwischenprodukt erhalten wird, und in einem dritten Verfahrensabschnitt zu gewünschter Zeit an einem gewünschten Ort der Verkäsungsprozeß fortgesetzt wird und das Zwischenprodukt durch Auftauen und Aufschmelzen in heißem Wasser, Kneten, Ziehen und Formen unmittelbar in den Zustand von Mozzarella-Frischkäse überführt wird.

## Beschreibung

Die Erfindung bezieht sich auf ein Verfahren zum Herstellen von Mozzarella-Frischkäse und einem Käsebruch hierfür. Mozzarella ist ein weißer ungereifter Frischkäse mit mildem Geschmack und geschmeidiger weißer fadenziehender elastischer Struktur.

Für die Herstellung von Mozzarella aus Wasserbüffelmilch oder Kuhmilch wird in bekannter Weise die verwendete Vollmilch zunächst auf etwa 35°C erwärmt und dann wird Lab, vorzugsweise Kälberlab und/oder mikrobielles Lab beigegeben. Dadurch gerinnt die Milch und dickt ein, es entsteht der sogenannte Käsebruch. Die Zugabe von Zitronensäure beschleunigt diesen Prozeß. Es wandeln die Milchsäurebakterien den in der Milch enthaltenen Milchzucker zum Teil in Milchsäure um, diese bindet die Gerüstsubstanz der Milcheiweißstoffe, das Calcium an sich, so daß das Gerüst zusammenbricht und das Milcheiweiß - Kasein - als dickflüssige Masse sich in der dünnflüssigen verbleibenden Molke absetzt. Durch Abtrennen der Molke und Schneiden des ausgefällten Kaseins erhält man den sogenannten Käsebruch. Durch Aufschmelzen, Kneten und Ziehen wird aus dem Käsebruch nachfolgend eine fadenziehende elastische Masse - die Mozzarella - ein weicher Frischkäse erhalten. Mozzarella-Frischkäse ist ohne weitere Reifezeit sofort servierfähig und verzehrfähig und entfaltet das beste Aroma und den besten Geschmack je frischer er zum Verzehr angeboten wird. Damit Mozzarella-Frischkäse nicht austrocknet und verdirbt, wird er in Salzwasser eingelegt und verpackt in den Handel verbracht. Frische Mozzarella ist auch in Salzwasser eingelegt nur wenige Tage frisch mit weicher Konsistenz und bestem Geschmack aufzubewahren, mit längerer Lagerzeit vollzieht sich ein Migrationsprozeß in beiden Richtungen aus dem Salzwasser in die Mozzarella und umgekehrt, wodurch die Mozzarella in Frische und Geschmack verliert und trocken und härter wird. Dies gilt umso mehr bei Einsatz von Kulturen anstelle von Lab bei der Herstellung der Mozzarella, da die Kulturen - Bakterien - den Umwandlungsprozeß auch in der Mozzarella fortsetzen und somit diese in der Konsistenz und geschmacklich verändern. Andererseits weist eine frische Mozzarella, die unter Einsatz von Kulturen hergestellt wurde, ein besonders gutes Aroma und Geschmack auf. Da industriell hergestellte Mozzarella eine Mindestdauer von 25 Tagen nach Herstellung aufweisen muß, ist hierdurch der Einsatz von Kulturen eingeschränkt, da Mozzarella mit zu hohem Anteil an Kulturen schneller altert und somit zu schnell an Geschmack und Aroma verliert. Am besten schmeckt tagesfrisch hergestellte Mozzarella.

Da Mozzarella aus natürlichen Zutaten hergestellt wird, ist sie frei von Konservierungsstoffen und daher nur begrenzt haltbar.

Aus der EP 05 35 268 B1 ist bereits ein Verfahren zum Haltbarmachen von Mozzarella bekannt geworden, bei dem frisch hergestellte Mozzarella in kaltem Wasser abgekühlt wird und der abgekühlte Frischkäse innerhalb von 48 Stunden nach Entfernen aus dem Salzwasser bei Temperaturen um -4°C eingefroren wird, wobei eine salzhaltige Mozzarella erhalten wird, in dem zusätzlich zur Haltbarmachung Natriumchlorid eingebracht wird. Um kleinere Käsestückchen zu erhalten, wird der in kaltem Salzwasser abgekühlte Frischkäse nach der Entfernung aus dem Salzwasser zerkleinert und anschließend bei Temperaturen wenig unterhalb des Gefrierpunktes eingefroren. Die so erhaltenen gefrorenen Teilchen von Mozzarella sind relativ salzhaltig und relativ trocken, wodurch der frische Geschmack vermindert ist und sie werden bevorzugt als Miniteilchen zum Aufstreuen auf Pizzen und zum Backen eingesetzt. Sie haben durch die Behandlung mit Salz und Salzwasser an Frische und Feuchtigkeit verloren und es fehlt ihnen die Frischequalität.

Der Erfindung liegt die Aufgabe zugrunde, jederzeit tagesfrischen Mozzarella-Frischkäse auch außerhalb industrieller Produktionsstätten zur Verfügung zu stellen, wobei eine preiswerte und wirtschaftliche Herstellung gewährleistet sein soll.

Erfindungsgemäß wird diese Aufgabe mit einem Verfahren gemäß Patentanspruch 1 gelöst, bei dem zum Herstellen von Mozzarella-Frischkäse in einem ersten Verfahrensabschnitt aus Milch durch Fermentation und Einlaben ein Käsebruch erhalten wird, in einem zweiten Verfahrensabschnitt der Käsebruch schockgefrostet wird, wobei der Verkäsungsprozeß unterbrochen wird und ein lagerfähiges transportables Zwischenprodukt erhalten wird und in einem dritten Verfahrensabschnitt zu gewünschter Zeit an einem gewünschten Ort der Verkäsungsprozeß fortgesetzt wird und das Zwischenprodukt - schockgefrosteter Käsebruch - durch Auftauen und Aufschmelzen in heißem Wasser, Kneten, Ziehen und Formen unmittelbar in den Zustand von Mozzarella-Frischkäse überführt wird.

Durch die erfindungsgemäße Unterbrechung des Verkäsungsprozesses zum Herstellen von Mozzarella-Frischkäse aus frischer Milch durch Einfügen einer Schockfrostung in den Verkäsungsprozeß gelingt es, das Problem der Haltbarkeit von frisch hergestellter Mozzarella zu umgehen und den Fertigstellungsort und Zeitpunkt des Mozzarella-Frischkäses unabhängig von dem ersten Verfahrensabschnitt der Herstellung des Käsebruches aus Frischmilch zu wählen.

Erfindungsgemäß ist es somit möglich, Frischmilch in großen Mengen in einer Molkerei oder sonstigen Produktionsstätte zu Käsebruch zu verarbeiten, dann den Verkäsungsprozeß zu unterbrechen, den erhaltenen Käsebruch durch Schockgefrierung lagerfähig und transportfähig zu machen, um ihn dann zu einem späteren Zeitpunkt und an einem anderen Ort aufzutauen und den Verkäsungsprozeß bis zum Erhalt des Mozzarella-Frischkäses zu Ende zu führen. Auf diese Weise gelingt es vom Tag der Verarbeitung der Frischmilch bis zum Erhalt des Mozzarella-Frischkäses von bisher einem Tag auf einen Zeitraum von bis zu 5 bis 6 Monaten zu verlängern. Erfindungsgemäß kann auch das Problem gelöst werden, daß zu bestimmten Jahreszeiten weniger Mozzarella verzehrt wird, und zu anderen Zeiten mehr, jedoch die Basis - Frischmilch - stets in gleichen Mengen zur Verfügung steht. Erfindungsgemäß kann somit für Zeiten von maximalem Verzehr ein Vorrat angelegt werden - Speicher - mit dem es möglich ist auch zu einem späteren Zeitpunkt Mozzarella-Frischkäse gleicher Qualität herzustellen wie von einem Mozzarella-Frischkäse, der von der Frischmilch bis zum Mozzarella-Frischkäse an einem Tag verarbeitet wurde.

Es wurde gefunden, daß durch das Schockfrosten die Qualität des Käsebruches nicht leidet, vielmehr wird dieser schonend konserviert und der Zustand des Käsebruches, wie er vor dem Schockfrosten vorhanden war, wird erhalten. Der Zustand des wieder aufgetauten Käsebruches entspricht also auch bakteriologisch dem Zustand vor dem Schockfrosten desselben.

Vorteilhafte Ausgestaltungen des erfindungsgemäßen Verfahrens sind den kennzeichnenden Merkmalen der Unteransprüche entnehmbar.

Der schockgefrostete Käsebruch wird als Zwischenprodukt zu gewünschten Gebinden verpackt und bei entsprechenden Temperaturen unterhalb des Gefrierpunktes gelagert und kann in dieser Form an jeden gewünschten Abnehmer ausgeliefert werden. Der Bezieher des schockgefrosteten Käsebruches gemäß der Erfindung benötigt für die Fortsetzung des Verkäsungsprozesses ein Gefäß, das beheizbar ist oder mit entsprechend heißem Wasser angefüllt wird für die Aufnahme des Zwischenproduktes sowie entsprechende Knet- und Ziehvorrichtungen, um die aufgeschmolzene Masse zu bearbeiten. Bei Erreichen der gewünschten Konsistenz für Mozzarella-Frischkäse beginnt das Ausformen in die gewünschte Gestalt wie Kugeln, Stangen, Zöpfe oder dergleichen. Dieser zweite Teil des Verkäsungsprozesses, der vor Ort durchgeführt wird, kann mit kleinen Gerätschaften manuell oder auch maschinell durchgeführt werden. Innerhalb weniger Stunden erhält man so vor Ort einen Mozzarella-Frischkäse, der sogleich zum Verzehr geeignet ist oder unmittelbar, gegebenenfalls auch mit weiteren Zutaten, wie Gewürzen, Tomaten, Schnittlauch, Basilikum, Paprika usw. portionsweise weiterverkauft werden kann. Darüber hinaus kann der so frisch hergestellte Mozzarella-Frischkäse auch für den Transport und gegebenenfalls einige Tage der gewünschten Haltbarkeit in Lake abgepackt weitergereicht werden.

An der traditionellen Herstellung von Mozzarella ändert das erfindungsgemäße Verfahren insoweit nichts, außer daß es den Verfahrensschritt des Schockfrostens einschiebt, wodurch eine sich anschließende Lagerzeit und Transportmöglichkeit ergibt, bevor das fertige verkaufsfähige, servierfähige Produkt erhalten wird.

Die wesentlichen Verfahrensschritte von Mozzarella-Frischkäse gemäß der Erfindung umfassen die nachfolgenden Schritte:
a) Milch von Kühen oder Wasserbüffeln wird pasteurisiert,
b) die pasteurisierte Milch wird auf eine Temperatur im Bereich von 35°C gebracht,
c) der warmen pasteurisierten Milch wird tierisches Lab und/oder mikrobielles Lab und/oder Kulturen von Milchsäure produzierenden Bakterien, gegebenenfalls Säuerungsmittel, wie Zitronensäure zugegeben,
d) die infolge dessen gerinnende und eindickende Milch bildet ein dickflüssiges Kasein (Milcheiweißstoffe) und dünnflüssige Molke,
e) das in der Molke abgesetzte Kasein wird durch Schneiden zu Bruchstücken zerkleinert und durch Abtrennen der Molke Käsebruch erhalten,
f) anschließend wird der Käsebruch drainiert,
g) der drainierte Käsebruch wird unmittelbar anschließend mittels eines flüssigen inerten Kältemittels, wie flüssiger Kohlensäure oder flüssigem Stickstoff innerhalb weniger Sekunden auf eine Temperatur unterhalb -20°C schockgefrostet,
h) der schockgefrostete Käsebruch wird als Zwischenprodukt in gewünschte Gebinde abgepackt und bei Temperaturen unterhalb des Gefrierpunktes gelagert,
i) zu gegebener Zeit wird das Zwischenprodukt dem weiteren Verkäsungsprozeß zugeführt und aufgetaut und in salzhaltigem heißem Wasser bis zu etwa 95°C aufgeschmolzen, geknetet und gezogen, bis eine geschmeidige elastische fadenziehende Masse sich gebildet hat, die einem Mozzarella-Frischkäse entspricht und aus dieser Masse manuell oder maschinell Kugeln, Zöpfe, Stangen ausgeformt werden.

Tierisches Lab ist bevorzugt Kälberlab. Durch Einsatz von Kulturen von milchsäureproduzierenden Bakterien kann der Geschmack der Mozzarella verbessert werden, da hierdurch mehr Aroma erzeugt werden kann, andererseits die frisch hergestellte Mozzarella dann auch innerhalb weniger Tage aufzubrauchen ist, da sie danach durch die Aktivität der Kulturen schneller an Konsistenz und Geschmack verliert. Durch das erfindungsgemäße Schockfrosten des Käsebruches erhält man eine ausreichende Haltbarkeit, auch bei Einsatz von Kulturen, um das nach dem Auftauen frisch hergestellte Produkt vor Ort zu verkaufen, wobei es für mindestens 5 Tage frisch bleibt. Selbstverständlich kann auch dieses vor Ort hergestellte frische Produkt durch steriles Abpacken in Lake für eine längere Zeitdauer haltbar gemacht werden.

Das Zwischenprodukt - der erfindungsgemäß schockgefrostete Käsebruch-gemäß Anspruch 9 bzw. 10 hingegen ermöglicht, entsprechend täglichem Bedarf täglich frisch vor Ort die gewünschte Menge an Mozzarella-Frischkäse tagesfrisch herzustellen.

Im ersten Teil des Verkäsungsprozesses gerinnt die Milch und es entsteht das Milcheiweiß - Kasein - das sich als dickflüssige Masse in der verbleibenden dünnflüssigen Molke absetzt. In diesem ausgefällten Kasein ist ebenfalls noch ein großer Anteil der Molke eingeschlossen. Es wird nun das ausgefällte Kasein durch Schneiden zu kleinen Bruchstücken zerkleinert, um auch den Austritt der Molke zu erleichtern. Es wird nicht nur die Molke von dem Käsebruch abgetrennt, sondern der verbleibende Käsebruch wird erfindungsgemäß zusätzlich drainiert, beispielsweise beim kontinuierlichen Durchlaufen durch eine Lochtrommel. Erfindungsgemäß wird vorgesehen, daß der Käsebruch auf eine Trockenmasse von 35 bis 46%, insbesondere 36 bis 42% drainiert wird. Hierbei wird unter Trockenmasse die gesamte feste Masse verstanden.

Der drainierte Käsebruch wird innerhalb weniger Sekunden bei sehr tiefen Temperaturen schockgefrostet, wobei die Temperatur des drainierten Käsebruchs auf mindestens -20°C oder darunter, vorzugsweise -25°C oder niedriger abgesenkt wird. Das zum Schockfrosten verwendete flüssige Kältemittel sollte eine Temperatur unterhalb -40°C aufweisen. Als flüssige Kältemittel kommen gegenüber Lebensmitteln, hier Käse, inerte Stoffe infrage, wie beispielsweise flüssiger Stickstoff oder flüssige Kohlensäure. Für die Schockfrostung des drainierten Käsebruchs wird eine Zeitdauer von etwa 2 bis 6 Sekunden angewendet. Der drainierte Käsebruch wird bevorzugt auf einem Transportband durch ein flüssiges Bad aus einem inerten Kältemittel gezogen.

Der als Zwischenprodukt abgepackte schockgefrostete Käsebruch kann zu dem Zeitpunkt, wo er zu Mozzarella-Frischkäse verarbeitet werden soll, aufgetaut werden und dann in heißes salzhaltiges Wasser eingebracht werden oder aber auch direkt in heißes salzhaltiges Wasser zum Aufschmelzen eingebracht werden. Das heiße Wasser hat üblicherweise eine Temperatur zwischen 70 bis 90°C. Die Verarbeitung durch Kneten und Ziehen bis zum Ausformen erfolgt in bekannter Weise.

Erfindungsgemäße wird auch der schockgefrostete Käsebruch aus Kuhmilch oder Wasserbüffelmilch als Zwischenprodukt für die Herstellung von Mozzarella-Frischkäse beansprucht, der durch Auftauen und Aufschmelzen des schockgefrosteten Käsebruchs in heißem salzhaltigen Wasser, Kneten, Ziehen und Ausformen zu Kugeln, Zöpfen, Stangen erhalten wird. Der schockgefrostete Käsebruch zeichnet sich dadurch aus, daß er aus einem drainierten Käsebruch mit einer Trockenmasse von 35 bis 46%, insbesondere 36 bis 42% besteht und in einem inerten flüssigen Kältemittel einer Temperatur unterhalb -40°C in wenigen Sekunden schockgefrostet wurde.

Für die Herstellung des Käsebruchs und der Mozzarella wird Vollmilch eingesetzt, so daß der herzustellende Mozzarella-Frischkäse in der Trockenmasse mindestens 30% (Halbfett) bis zu 46% Fett oder mehr in der Trockenmasse enthält.

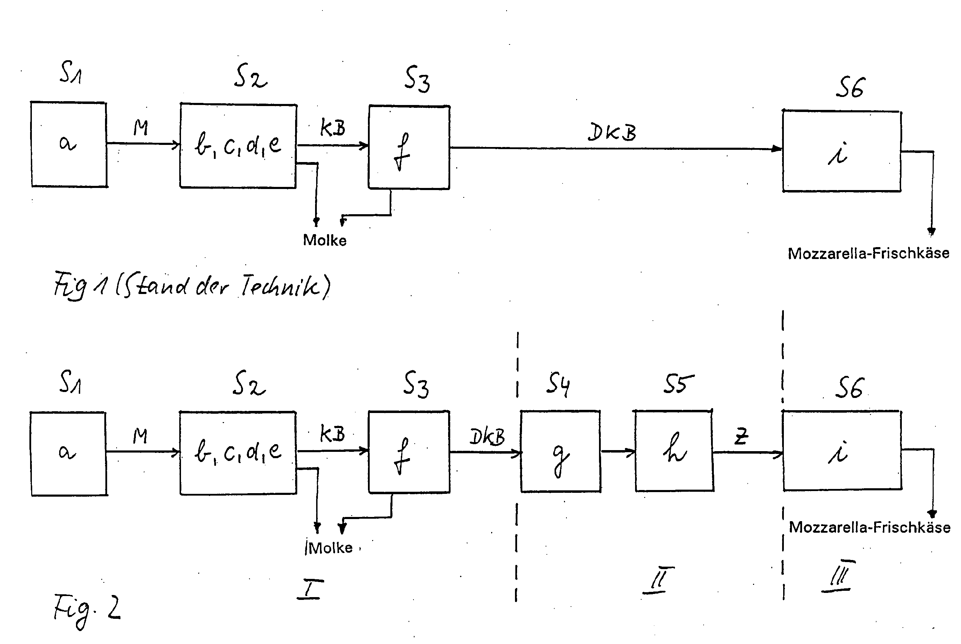

In der Figur 1 ist das traditionelle Verfahren zum Herstellen von Mozzarella-Frischkäse schematisch dargestellt und in der Figur 2 das erfindungsgemäße Verfahren zum Herstellen von Mozzarella-Frischkäse dargestellt.

Bei der traditionellen Herstellung von Mozzarella-Frischkäse, wie sie in der Figur 1 schematisch dargestellt ist, wird die frisch angelieferte Vollmilch in der Station S1 gemäß Verfahrensschritt a pasteurisiert, beispielsweise bei Temperaturen über 70°C und anschließend die Milch M in den Fermenter gemäß Station S2 überführt, in dem sie auf 35°C erwärmt wird, hier das Lab und Säuerungsmittel, Zitronensäure, Kulturen zugegeben werden, wodurch die Gerinnung der Milch und das Eindicken derselben bewirkt wird und die Milcheiweißstoffe ausgefällt werden. Zum Schluß wird das ausgefällte Kasein - der Käsebruch KB - zerkleinert und die Molke abgezogen - Verfahrensabschnitte b, c, d, e - und der Käsebruch zum weiteren Drainieren in die Station S3, in der sich eine Lochtrommel befindet, überführt - Verfahrensabschnitt f -. Nach dem Durchführen des Drainageschrittes f wird der drainierte Käsebruch DKB der Station S6 zugeführt, in welcher die Verfahrensschritte i, nämlich das Aufschmelzen, Kneten und Ziehen, bis der Zustand der Mozzarella erreicht ist, durchgeführt werden und dann die entsprechenden Formen, wie Kugel, Stange, Zopf ausgeformt werden. Der frisch hergestellte Mozzarella-Frischkäse wird dann portionsweise verkaufsfertig abgepackt.

Das traditionelle Verfahren wird erfindungsgemäß, siehe Figur 2, um die Verfahrensschritte g und h in den Stationen S4 und S5, nämlich Schockfrosten, Abpacken und Lagern, einschließlich Transport erweitert, wobei diese Verfahrensschritte vor dem Aufschmelzen des drainierten Käsebruches DKB in der Station S6 eingeschoben werden, wodurch der Verkäsungsprozeß unterbrochen wird. Erfindungsgemäße erhält man einen ersten Verfahrensabschnitt l mit den Verfahrensschritten a bis f, d. h. Herstellen des drainierten Käsebruches und Abzug der Molke. Der Verfahrensabschnitt II umfaßt die Unterbrechung des Verkäsungsprozesses durch Schockfrostung in der Station S4 und Abpacken und Lagern h in der Station S5 zusammengefaßt für einen längeren Zeitraum bis zu 6 Monaten etwa und umfaßt auch die örtliche Veränderung. Die Wiederaufnahme des Verkäsungsprozesses und Fertigstellung des Mozzarella-Frischkäses aus dem durch das Schockfrosten erhaltenen Zwischenproduktes Z eines tiefgefrorenen drainierten Käsebruchs erfolgt im Verfahrensabschnitt III mit dem Verfahrensschritt i, wie beschrieben, zu gegebener Zeit am gegebenen Ort, um Mozzarella-Frischkäse in bester Frischequalität in der gewünschten Menge zu erhalten.

## Patentansprüche

1. Verfahren zum Herstellen von Mozzarella-Frischkäse, bei dem in einem ersten Verfahrensabschnitt aus Kuhmilch oder Wasserbüffelmilch durch Fermentation und Einlaben ein Käsebruch erhalten wird, in einem zweiten Verfahrensabschnitt der Käsebruch schockgefrostet wird, wobei der Verkäsungsprozeß unterbrochen und ein lagerfähiges transportables Zwischenprodukt erhalten wird, und in einem dritten Verfahrensabschnitt zu gewünschter Zeit an einem gewünschten Ort der Verkäsungsprozeß fortgesetzt wird und das Zwischenprodukt durch Auftauen und Aufschmelzen in heißem Wasser, Kneten, Ziehen und Formen unmittelbar in den Zustand von Mozzarella-Frischkäse überführt wird.

2. Verfahren nach Anspruch 1, **gekennzeichnet durch** folgende Verfahrensschritte:
a) Milch von Kühen oder Wasserbüffeln wird pasteurisiert,
b) die pasteurisierte Milch wird auf eine Temperatur im Bereich von 35°C gebracht,
c) der warmen pasteurisierten Milch wird tierisches Lab und/oder mikrobielles Lab und/oder Kulturen von Milchsäure produzierenden Bakterien, gegebenenfalls Säuerungsmittel, wie Zitronensäure zugegeben,
d) die infolge dessen gerinnende und eindickende Milch bildet ein dickflüssiges Kasein (Milcheiweißstoffe) und dünnflüssige Molke,
e) das in der Molke abgesetzte Kasein wird **durch** Schneiden zu Bruchstücken zerkleinert und **durch** Abtrennen der Molke Käsebruch erhalten,
f) anschließend wird der Käsebruch drainiert,
g) der drainierte Käsebruch wird unmittelbar anschließend mittels eines flüssigen inerten Kältemittels, wie flüssiger Kohlensäure oder flüssigem Stickstoff innerhalb weniger Sekunden auf eine Temperatur unterhalb - 20°C schockgefrostet,
h) der schockgefrostete Käsebruch wird als Zwischenprodukt in gewünschte Gebinde abgepackt und bei Temperaturen unterhalb des Gefrierpunktes gelagert,
i) zu gegebener Zeit wird das Zwischenprodukt dem weiteren Verkäsungsprozeß zugeführt und aufgetaut und in salzhaltigem heißem Wasser bis zu etwa 95°C aufgeschmolzen, geknetet und gezogen, bis eine geschmeidige elastische fadenziehende Masse sich gebildet hat, die einem Mozzarella-Frischkäse entspricht und aus dieser Masse manuell oder maschinell Kugeln, Zöpfe, Stangen ausgeformt werden.

3. Verfahren nach Anspruch 1 oder 2, **dadurch gekennzeichnet, daß** der Käsebruch beim kontinuierlichen Durchlauf durch eine Lochtrommel drainiert wird.

4. Verfahren nach einem der Ansprüche 1 bis 3, **dadurch gekennzeichnet, daß** der Käsebruch zwecks Schockfrosten auf eine Trockenmasse von 35 bis 46%, insbesondere 36 bis 42% drainiert wird.

5. Verfahren nach einem der Ansprüche 1 bis 4, **dadurch gekennzeichnet, daß** der Käsebruch innerhalb 2 bis 6 Sekunden bei einer Temperatur des flüssigen Kältemittels unterhalb -40°C schockgefrostet wird.

6. Verfahren nach einem der Ansprüche 1 bis 5, **dadurch gekennzeichnet, daß** der Käsebruch auf einem Transportband durch ein flüssiges Bad aus einem inerten Kältemittel gezogen wird.

7. Verfahren nach einem der Ansprüche 1 bis 6, **dadurch gekennzeichnet, daß** das Zwischenprodukt des schockgefrosteten Käsebruchs nach dem Auftauen wieder den gleichen Zustand auch bakteriologisch wie vor dem Schockfrosten aufweist.

8. Verfahren nach einem der Ansprüche 1 bis 6, **dadurch gekennzeichnet, daß** das Zwischenprodukt für eine Zeitdauer von mindestens 5 Monaten lagerfähig bleibt.

9. Schockgefrosteter Käsebruch aus Kuhmilch oder Wasserbüffelmilch für die Herstellung von Mozzarella-Frischkäse durch Auftauen des schockgefrosteten Käsebruchs, Aufschmelzen in heißem salzhaltigen Wasser, Kneten, Ziehen und Ausformen zu Kugeln, Zöpfen, Stangen.

10. Schockgefrosteter Käsebruch nach Anspruch 9, **dadurch gekennzeichnet, daß** er aus einem drainierten Käsebruch mit einer Trockenmasse von 35 bis 46%, insbesondere 36 bis 42% besteht und in einem inerten flüssigen Kältemittel bei einer Temperatur unterhalb -40°C in wenigen Sekunden schockgefrostet ist.
